# EUROPEAN PATENT APPLICATION

(11) **EP 4 525 454 A1**
(43) Date of publication of application: **19.03.2025**
(21) Application number: 23196846.2
(22) Date of filing: 12.09.2023
(51) Int. Cl.: H04N 21/234, H04N 21/2389, H04N 21/8358, H04N 21/845, H04N 21/236

(54) **METHOD FOR GENERATING A PLURALITY OF DATA STREAMS FROM WATERMARKED STREAMS, METHOD FOR GENERATING A WATERMARKED DATA STREAM FROM DATA STREAMS, CORRESPONDING COMPUTER PROGRAM PRODUCT AND DEVICES**

(71) Applicant: Broadpeak, 35510 Cesson Sevigne (FR)
(72) Inventor: NEUMANN, Christoph, 35510 CESSON-SÉVIGNÉ (FR); STERKERS, Damien, 35510 CESSON-SÉVIGNÉ (FR); BREBION, Remy, 35510 CESSON-SÉVIGNÉ (FR)
(74) Representative: Ipside

(57) **Abstract**

A method is proposed for generating a plurality of data streams from a first watermarked stream and from a second watermarked stream. Such method comprises:
- calculating (5420) a main stream comprising at least one portion of common data present both in the first watermarked stream and in the second watermarked stream;
- for at least one watermarked stream among the first and second watermarked streams: calculating (S430) a differential stream, comprising at least one portion of data present in the watermarked stream and not present in the main stream; and
- sending (S440) the main stream and the at least one differential stream to a remote electronic device.

## Description

### 1. FIELD OF THE DISCLOSURE

The field of the disclosure is that of the delivery of digital assets (e.g. digital audio or video assets) to end-users.

More specifically, the disclosure relates to a technic for identifying, through watermarking, an end-user receiving such a digital asset.

The disclosure can be of interest in any field wherein such digital assets have to be delivered to end-users. This is the case for instance in the field of audio or video streaming.

### 2. TECHNOLOGICAL BACKGROUND

To fight content piracy, content owners increasingly request that invisible watermarks are inserted into their digital assets, e.g. live video or VoD, when these assets are delivered to the end-users. The watermark is used for traitor-tracing: the identifier encoded within the watermark allows to uniquely identify the end-users that received the content from a streaming platform and then leaked or shared the content publicly.

A common approach in the field of streaming relies on A/B watermarking. It consists in preparing two versions of the same content, one with a mark A and one with a mark B and to provide unique sequences of video segments to end-users - each video segment either encoding an A or a B mark. The identifier of the end-user corresponds to the sequence of A/B marks. In other words, if mark A encodes e.g. a low state bit "0" and mark B encodes a high state bit "1", the sequence of A/B marks corresponds to the binary representation of the identifier of the end-user.

Conversely, Hypertext Transfer Protocol (HTTP) adaptive streaming being a unicast approach, it integrates well with such A/B watermarking approach as the set of segments delivered is customized on a per-client basis. The switching between A-B segments is typically done by a unicast streaming server (e.g., an CDN edge cache) that transparently selects and delivers the sequence of A/B segments, without involving or requiring the end-users/players to cooperate. Such solution is called server-side video A/B waterma rki ng.

Yet, unicast delivery requires a large number of servers in order to scale to large audiences. To address this scaling issue, a possible approach is to use multicast ABR (Adaptive Bitrate), or mABR. It consists in multicasting the video to the end-users' gateways and to switch to unicast HTTP adaptive streaming only on the last link (i.e., between the user gateway, and the user terminal), by having an agent running on the gateway receiving multicast traffic and serving the content over HTTP unicast connections to user terminals.

However, A/B watermarking doubles the volume of data to be handled by the elements in the content delivery chain: two distinct versions of the same content need to be transported over the networks. The two versions must also be cached (e.g., stored) on cache servers (e.g., streaming server, edge cache, edge streamer, CDN server). This doubles the average volume of data transported and doubles the peak traffic in core network (e.g., upstream to edge streamers). In the particular case of multicast delivery (e.g., mABR) the two versions are multicast up to a home gateway or SetTopBox (STB). Some end-user's last mile connections (broadband, DSL, FWE...) might not have the capacity to transport both versions of the content (or transporting both would largely reduce the remaining bandwidth available for other usages).

There is thus a need for a solution for reducing the volume of data required for identifying through watermarking an end-user receiving a digital asset, e.g. in the perspective of an implementation of an A/B watermarking scheme.

### 3. SUMMARY

A particular aspect of the present disclosure relates to a method for generating a plurality of data streams from a first watermarked stream and from a second watermarked stream. According to such method, a first electronic device executes:
- calculating a data stream, hereafter main stream, comprising at least one portion of common data present both in the first watermarked stream and in the second watermarked stream;
- for at least one watermarked stream among the first and second watermarked streams: calculating a data stream, hereafter differential stream, comprising at least one portion of data present in the watermarked stream and not present in the main stream; and
- sending the main stream and the at least one differential stream to a remote second electronic device.

Thus, the present disclosure proposes a new and inventive solution for reducing the volume of data required for identifying through watermarking an end-user receiving a digital asset, e.g. in the perspective of an implementation of an A/B watermarking scheme.

More particularly, the way the main stream and the differential stream(s) are constructed allows canceling one occurrence of the common data that are present both in the first and second watermarked streams. The present technics thus allows avoiding transmitting twice the information that is redundant between the first and second watermarked streams, therefore reducing the volume of data required for providing the information carried by the two watermarked streams.

In some embodiments, the main stream is the first watermarked stream and the calculating is executed for the second watermarked stream. The first watermarked stream and the second watermarked stream are of same length. The calculating implements an element-wise comparison between the first watermarked stream and the second watermarked stream.

For instance, the element-wise comparison comprises a sample wise or a TS packet wise or a fixed byte range wise or a video chunk wise or a fragment wise comparison between the first watermarked stream and the second watermarked stream. The comparison implements e.g. a difference implemented e.g. through a bitwise XOR.

In some embodiments, the main stream is the first watermarked stream and the calculating is executed for the second watermarked stream. The first watermarked stream and the second watermarked stream are of different length, the calculating comprising:
- searching in the second watermarked stream for a piece of data present in the first watermarked stream;
- if the piece of data is found in the second watermarked stream, inserting in the differential stream an information representative of the location of the piece of data in the second watermarked stream; and
- if the piece of data is not found in the second watermarked stream, inserting in the differential stream an information representative of the location of the piece of data in the first watermarked stream and representative of the need to delete the piece of data from the first watermarked stream to reconstruct the second watermarked stream.

In some embodiments wherein the main stream is the first watermarked stream and the calculating is executed for the second watermarked stream and wherein the first watermarked stream and the second watermarked stream are of different length, the calculating comprises:
- searching in the first watermarked stream for a piece of data present in the second watermarked stream; and
- if the piece of data is not found in the first watermarked stream, inserting in the differential stream an information representative of the location of the piece of data in the second watermarked stream and of the need to add the piece of data to reconstruct the second watermarked stream.

For instance, the piece of data is a sample or a TS packet or a fixed byte block or a video chunk or a fragment.

In some embodiments the main stream comprises the common data between the first watermarked stream and the second watermarked stream. The calculating comprises:
- for the first watermarked stream, calculating a first differential stream comprising the data present in the first watermarked stream and not present in the main stream; and
- for the second watermarked stream, calculating a second differential stream comprising the data present in the second watermarked stream and not present in the main stream.

This allows simplifying the reconstruction of the first and second watermarked streams. The second electronic device may for instance fetch the main stream and the differential streams and has only to apply the add operations (e.g. concatenation) between the main streams and the differential streams to reconstruct the first and second watermarked streams.

In some embodiments wherein the main stream comprises the common data between the first watermarked stream and the second watermarked stream, the sending comprises:
- sending the main stream based on a multicast protocol; and
- sending the first differential stream and the second differential stream based on a unicast protocol responsive to a request sent by the second electronic device.

Thus, the implementation of the present technics is very simple as it relies on existing mechanisms in the field of multicast broadcasting.

In some embodiments, the first electronic device executes:
- analyzing the first watermarked stream and the second watermarked stream in an unencrypted form for delivering at least one information representative of a part of the first watermarked stream and of the second watermarked stream carrying same data; and
- obtaining the first watermarked stream and the second watermarked stream in an encrypted form based on a sampled encryption mechanism using the at least one information.

The main stream and the at least one differential stream are calculated from the first watermarked stream and the second watermarked stream in the encrypted form.

Thus, the sampled encryption can take place preferably in parts of the first watermarked stream and of the second watermarked stream that carry different data. This allows preserving the data that are common between the first watermarked stream and the second watermarked stream, thus improving the overall reduction of the volume of data obtained by canceling one occurrence of the data that are present both in the first and second watermarked streams.

Another aspect of the present disclosure relates to a method for generating a watermarked data stream. According to such method, a second electronic device executes:
- receiving, from a first electronic device:
   - a data stream, hereafter main stream, comprising at least one portion of data present both in a first watermarked stream and in a second watermarked stream; and
   - at least one data stream, hereafter differential stream, associated to a respective watermarked stream among the first and second watermarked streams, the differential stream comprising at least one portion of data present in the respective watermarked stream and not present in the main stream.

The second electronic device executes:
- obtaining parts of the first watermarked stream and parts of the second watermarked stream from the main stream and from the at least one differential stream; and
- generating the watermarked data stream based on the parts of the first watermarked stream, based on the parts of the second watermarked stream and based on a predetermined identifier; and
- sending the watermarked data stream to a third electronic device.

For instance, the generating implements an A/B watermarking scheme.

In some embodiments, the receiving comprises receiving:
- the main stream which is the first watermarked stream; and
- a differential stream associated to the second watermarked stream.

The obtaining parts of the second watermarked stream comprises replacing the samples present in the main stream and that have a corresponding sample in the differential stream by the corresponding sample.

In some embodiments, the receiving comprises receiving:
- the main stream which is the first watermarked stream; and
- a differential stream associated to the second watermarked stream.

The obtaining parts of the second watermarked stream comprises at least one execution of an action belonging to the group comprising:
- inserting, in the generated second watermarked stream, a piece of data present in the main stream at a location identified by an information present in the differential stream;
- deleting a piece of data present in the main stream at a location identified by an information present in the differential stream; and
- adding, in the generated second watermarked stream, a piece of data present in the differential stream at a location identified by an information present in the differential stream.

The at least one execution is a function of the information.

In some embodiments, the receiving comprises receiving:
- the main stream comprising the common data between the first watermarked stream and the second watermarked stream;
- a first differential stream comprising the data present in the first watermarked stream and not present in the main stream; and
- a second differential stream comprising the data present in the second watermarked stream and not present in the main stream.

The obtaining parts of the first watermarked stream comprises adding data present in the first differential stream to the main stream. The obtaining parts of the second watermarked stream comprises adding data present in the second differential stream to the main stream.

Thus, the reconstruction of the parts of the first and of the second watermarked streams is simple as based only on add operations (e.g. concatenation).

Another aspect of the present disclosure relates to a computer program product comprising program code instructions for implementing the above-mentioned method for generating a plurality of data streams from a first watermarked stream and from a second watermarked stream (in any of the different embodiments discussed above), when the program is executed on a computer or a processor.

Another aspect of the present disclosure relates to a computer program product comprising program code instructions for implementing the above-mentioned method for generating a watermarked data stream (in any of the different embodiments discussed above), when the program is executed on a computer or a processor.

Another aspect of the present disclosure relates to an electronic device configured for implementing all or part of the steps of the above-mentioned method for generating a plurality of data streams from a first watermarked stream and from a second watermarked stream (in any of the different embodiments discussed above). Thus, the features and advantages of this device are the same as those of the corresponding steps of said method. Therefore, they are not detailed any further.

Another aspect of the present disclosure relates to an electronic device configured for implementing all or part of the steps of the above-mentioned method for generating a watermarked data stream (in any of the different embodiments discussed above). Thus, the features and advantages of this device are the same as those of the corresponding steps of said method. Therefore, they are not detailed any further.

### 4. LIST OF FIGURES

Other features and advantages of embodiments shall appear from the following description, given by way of indicative and non-exhaustive examples and from the appended drawings, of which:
- Figure 1 illustrates a first server communicatively connected to a second server which is communicatively connected to a terminal equipment according to one embodiment of the present disclosure;
- Figure 2 illustrates an example of the structural blocks of an electronic device allowing steps of the method of Figure 4, Figure 4a and Figure 4b, to be executed by the first server of Figure 1 according to one embodiment of the present disclosure;
- Figure 3 illustrates an example of the structural blocks of an electronic device allowing steps of the method of Figure 5 to be executed by the second server of Figure 1 according to one embodiment of the present disclosure;
- Figure 4 illustrates a flowchart of a method for generating a plurality of data streams from a first watermarked stream and from a second watermarked stream according to one embodiment of the present disclosure;
- Figure 4a illustrates steps executed during the calculation of the differential stream(s) in the method of Figure 4 according to one embodiment of the present disclosure;
- Figure 4b illustrates a flowchart of a method for generating a plurality of data streams from a first watermarked stream and from a second watermarked stream according to another embodiment of the present disclosure;
- Figure 5 illustrates a flowchart of a method for generating a watermarked data stream according to one embodiment of the present disclosure.

### 5. DETAILED DESCRIPTION

In all of the figures of the present document, the same numerical reference signs designate similar elements and steps.

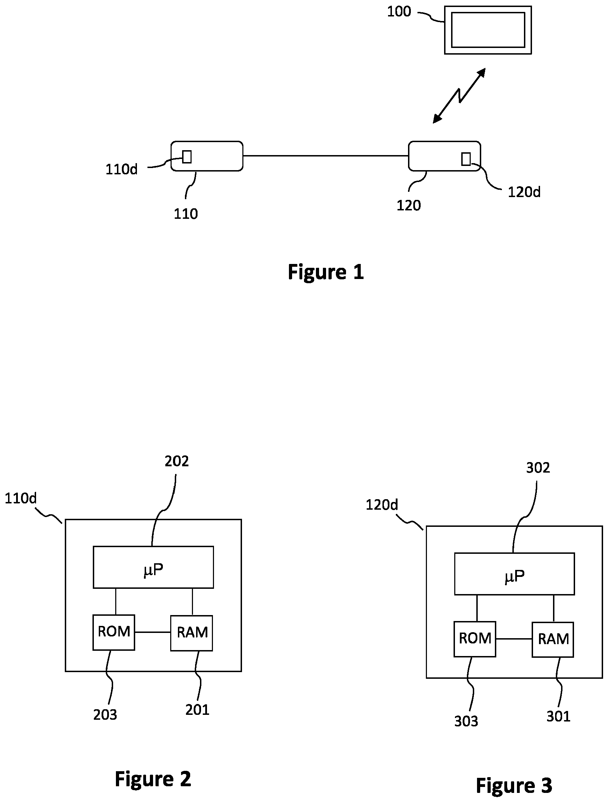

Referring now to **Figure 1****,** we illustrate a first server 110 communicatively connected to a second server 120 which is in turn communicatively connected to a terminal equipment 100 according to one embodiment of the present disclosure.

For instance, the first server 110 is communicatively connected to the second server 120 through a first network implementing wired broadband communications links. Such wired communications link is e.g. a xDSL communications link and implements e.g. an internet protocol. However, in some embodiments, the first network is a wireless communications network, e.g. based on a cellular protocol (e.g. a 3GPP 2G, 3G, 4G or 5G protocol) or on a WiMAX protocol.

Back to Figure 1, the second server 120 is communicatively connected to a terminal equipment 100 (e.g. a TV, a smartphone, a computer...) through a second network implementing wireless communications links. The second network is e.g. of the WLAN type (e.g. a WiFi network) or based on a cellular protocol (e.g. a 3GPP 2G, 3G, 4G or 5G protocol) or on a WiMAX protocol. In other embodiments, the second network implements wired broadband communications links, e.g. xDSL communications links. In some embodiments, the first network and the second network are a same network.

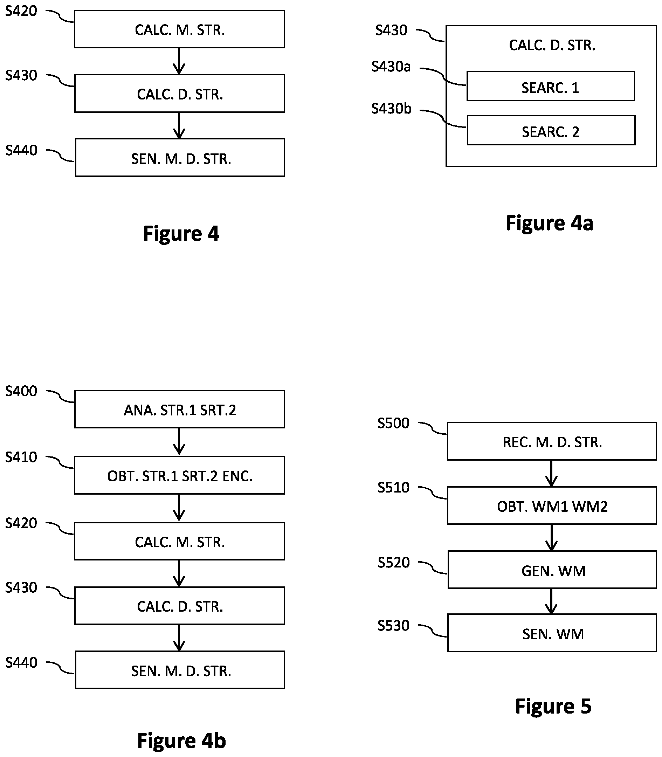

Back to Figure 1, the first server 110 executes the method for generating a plurality of data streams from a first watermarked stream and from a second watermarked stream discussed below in relation with Figure 4, Figure 4a and Figure 4b. For instance, in the context of A/B watermarking, the first watermarked stream is the data stream (e.g. a digital audio or video stream) carrying the A mark and the second watermarked stream is the data stream (e.g. a digital audio or video stream) carrying the B mark. The first watermarked stream and the second watermarked stream are e.g. in a Dynamic Adaptive Streaming over HTTP (DASH) format or in a HTTP Live Streaming (HLS) format or in a Transport Stream (TS) or fragmented mp4 format.

Based on the first watermarked stream and from the second watermarked stream, the first server 110 calculates a data stream, hereafter main stream, comprising one (or more) portion of common data present both in the first watermarked stream and in the second watermarked stream. The first server 110 also calculates for at least one watermarked stream among the first and the second watermarked streams, a data stream, hereafter differential stream, comprising one (or more) portion of data present in the respective watermarked stream and not present in the main stream. The first server 110 sends the main stream and the one (or two) differential stream to the second server 120.

Conversely, based on the main stream and on the one (or two) differential stream received from the first server 110, the second server 120 obtains (e.g. by calculation or directly when the first or second watermarked stream is part of the main stream) parts of the first watermarked stream and parts of the second watermarked stream. For instance, such part is a segment, a chunk, or any group of contiguous data in the stream. The second server 120 is thus able to generate a watermarked data stream based on the parts of first watermarked stream, based on the parts of second watermarked stream and based on a predetermined identifier e.g. associated to the terminal equipment 100. For instance, such generation implements an A/B watermarking scheme. In this case, the parts of the first watermarked stream and the parts of the second watermarked stream obtained by the second server 120 comprise the A-B segments needed for the binary representation of the predetermined identifier. For instance, the parts of the first watermarked stream encode the A segments and the parts of the second watermarked stream encode the B segments needed for such binary representation of the predetermined identifier. The second server 120 is able to send the watermarked data stream to the terminal equipment 100, thus uniquely identifying such stream associated to the terminal equipment 100.

The main stream and the differential stream(s) are constructed in such a way that one occurrence of the data that are present both in the first watermarked stream and in the second watermarked stream is canceled. The present technics thus allows avoiding transmitting twice the information that is redundant between the first watermarked stream and the second watermarked stream. As a result, the overall size of the main stream and differential stream(s) is smaller than the size of the original first watermarked stream and second watermarked stream, therefore reducing the volume of data required for providing the information carried by the first watermarked stream and the second watermarked stream to the second server 120.

In some embodiments, the first server 110 unicasts (e.g. using HTTP, or using TCP, or UDP) both the main stream and the differential stream(s) to the second server 120. For instance, the first server 110 is a packager server (or origin server) and the second server 120 is a cache server.

In some embodiments, the first server 110 multicasts (e.g. using mABR, MSYNC, FLUTE, ROUTE, NORM) both the main stream and the differential stream(s) to the second server 120. For instance, the first server 110 is a transcaster or a multicaster or a multicast server. The second server 120 is for instance a multicast agent or a nanoCDN, e.g. located in a home gateway or in a set top box.

In some embodiments wherein the first server 110 multicasts the main stream, and when the main stream comprises the common data between the first watermarked stream and the second watermarked stream, the second server 120 receives (or fetches) the parts of the differential streams following unicast requests sent whether to the first server 110 or to other server(s) able to deliver the differential streams. In this case, the implementation of the present technic is very simple as it can rely on existing mechanisms in the field of multicast broadcasting.

In order to be able to execute the corresponding steps of the method for generating a plurality of data streams from a first watermarked stream and from a second watermarked stream, in the various embodiments disclosed below in relationship with Figure 4, Figure 4a and Figure 4b, the first server 110 comprises a first electronic device 110d configured for executing said steps. In some embodiments such first electronic device 110d comprises (**Figure 2**):
- a non-volatile memory 203 (e.g. a read-only memory (ROM), a hard disk, a flash memory, etc.);
- a volatile memory 201 (e.g. a random-access memory or RAM) and a processor 202.

The non-volatile memory 203 is a non-transitory computer-readable carrier medium. It stores executable program code instructions, which are executed by the processor 202 in order to enable implementation of some steps of the method described below (method for generating a plurality of data streams from a first watermarked stream and from a second watermarked stream) in the various embodiments disclosed below in relationship with Figure 4, Figure 4a and Figure 4b.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

The steps of the method for generating a plurality of data streams from a first watermarked stream and from a second watermarked stream may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In order to be able to execute the corresponding steps of the method for generating a watermarked data stream, in the various embodiments disclosed below in relationship with Figure 5, the second server 120 comprises a second electronic device 120d configured for executing said steps. In some embodiments such second electronic device 120d comprises (**Figure 3**):
- a non-volatile memory 303 (e.g. a read-only memory (ROM), a hard disk, a flash memory, etc.);
- a volatile memory 301 (e.g. a random-access memory or RAM) and a processor 302.

The non-volatile memory 303 is a non-transitory computer-readable carrier medium. It stores executable program code instructions, which are executed by the processor 302 in order to enable implementation of some steps of the method described below (method for generating a watermarked data stream) in the various embodiments disclosed below in relationship with Figure 5.

Upon initialization, the aforementioned program code instructions are transferred from the non-volatile memory 303 to the volatile memory 301 so as to be executed by the processor 302. The volatile memory 301 likewise includes registers for storing the variables and parameters required for this execution.

The steps of the method for generating a watermarked data stream may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 4****,** we describe the steps of a method for generating a plurality of data streams from a first watermarked stream and from a second watermarked stream according to one embodiment of the present disclosure.

In a **step S420,** the first electronic device 110d calculates the main stream comprising one (or more) portion of common data present both in the first watermarked stream and in the second watermarked stream.

In a **step S430,** the first electronic device 110d calculates, for at least one watermarked stream among the first and second watermarked streams, the differential stream comprising one (or more) portion of data present in the watermarked stream and not present in the main stream.

In a **step S430,** the first electronic device 110d sends the main stream and the one (or two) differential stream to the second server 120, and more particularly to the second electronic device 120d implemented in the second server 120.

Thus, the way the main stream and the differential stream(s) are constructed allows canceling one occurrence of the common data that are present both in the first and second watermarked streams. The present technics thus allows avoiding transmitting twice the information that is redundant between the first and second watermarked streams, therefore reducing the volume of data required for providing the information carried by the two watermarked streams.

In some embodiments, the main stream is the first watermarked stream. In such embodiments, during the step S430, the calculation of the differential stream is executed for the second watermarked stream.

In some of those embodiments wherein the main stream is the first watermarked stream and wherein during the step S430 the calculation of the differential stream is executed for the second watermarked stream, the first watermarked stream and the second watermarked stream are of same length. In such cases, the calculation of the differential stream implements e.g. an element-wise comparison between the first watermarked stream and the second watermarked stream. For instance, the element-wise comparison consists in taking the i-th sample (or i-th TS packet or i-th fixed byte range or i-th video chunk or i-th fragment) of the first watermarked stream and the i-th sample (i-th TS packet or i-th fixed byte range or i-th video chunk or i-th fragment) from the second watermarked stream and to compute a difference between the two streams. If both samples are equal, this sample does not need to be added to the differential stream. If the two samples are different, only the sample of the second watermarked stream is added to the differential stream with some indication of the sample number (e.g., index, sequence number) in the second watermarked stream. In alternative implementations, the element-wise comparison is computed using a sample-wise XOR and the results are compressed.

In other of those embodiments wherein the main stream is the first watermarked stream and wherein during the step S430 the calculation of the differential stream is executed for the second watermarked stream, the first watermarked stream and the second watermarked stream are of different length. In such cases, the calculation of the differential stream comprises e.g. steps executed by the first electronic device 110d. For instance **(****Figure 4a****):**
In a **step S430a,** the first electronic device 110d searches in the second watermarked stream for a piece of data present in the first watermarked stream:
- if the piece of data is found in the second watermarked stream, the first electronic device 110d inserts in the differential stream an information representative of the location of the piece of data in the second watermarked stream; and
- if the piece of data is not found in the second watermarked stream, the first electronic device 110d inserts in the differential stream an information representative of the location of the piece of data in the first watermarked stream and representative of the need to delete the piece of data from the first watermarked stream to reconstruct the second watermarked stream.

Alternatively, or in addition depending on the implementation, in a step S430b, the first electronic device 110d searches in the first watermarked stream for a piece of data present in the second watermarked stream:
- if the piece of data is not found in the first watermarked stream, the first electronic device 110d inserts in the differential stream an information representative of the location of the piece of data in the second watermarked stream and of the need to add the piece of data to reconstruct the second watermarked stream.

For instance, the piece of data is a sample or a TS packet or a fixed byte block or a video chunk or a fragment. The differential stream calculated according to the embodiment of Figure 4a comprises e.g. elements of the type:
- a tuple containing an identifier of a sample in the first watermarked stream with a delete operation and a size, the latter indicating the size of the payload to be deleted: e.g. (index/offset, "del", size); or
- a tuple containing an identifier of a sample in the first watermarked stream with an add operation and a payload to be inserted: e.g. (index/offset, "add", payload).

In some embodiments, the main stream comprises the common data between the first watermarked stream and the second watermarked stream. In such embodiments, during the step S430, the calculation of the differential stream is executed for both the first watermarked stream and the second watermarked stream. More particularly, the calculation comprises:
- for the first watermarked stream, calculating a first differential stream comprising the data present in the first watermarked stream and not present in the main stream; and
- for the second watermarked stream, calculating a second differential stream comprising the data present in the second watermarked stream and not present in the main stream.

This allows simplifying the reconstruction of the first and second watermarked streams. The second electronic device 120d may for instance fetch the main stream and the differential streams and has only to apply the add operations (e.g. concatenation) between the main streams and the differential streams to reconstruct the first and second watermarked streams.

In some of those embodiments wherein the main stream comprises the common data between the first watermarked stream and the second watermarked stream, the sending (step S440) comprises:
- sending the main stream based on a multicast protocol; and
- sending the first differential stream and the second differential stream based on a unicast protocol responsive to a request sent by the second electronic device 120d.

Thus, the implementation of the present technics is very simple as it relies on existing mechanisms in the field of multicast broadcasting.

Referring now to **Figure 4b****,** we describe the steps of a method for generating a plurality of data streams from a first watermarked stream and from a second watermarked stream according to another embodiment of the present disclosure.

More particularly, in the embodiment of Figure 4b, the main stream and the at least one differential stream are calculated from the first watermarked stream and the second watermarked stream in an encrypted form. More particularly, the encryption mechanism used for encrypting the first watermarked stream and the second watermarked stream is based on a sampled encryption mechanism. In order to improve the overall reduction of the volume of data obtained by canceling one occurrence of the data that are present both in the first and second watermarked streams, the sampled encryption should preferably take place in parts of the first watermarked stream and of the second watermarked stream that carry different data.

Accordingly, in a **step S400,** the first electronic device 110d analyzes the first watermarked stream and the second watermarked stream in an unencrypted form (i.e. in a clear form) for delivering one (or more) information representative of a part of the first watermarked stream and of the second watermarked stream carrying same data (or, alternatively, different data).

In a **step S410,** the first electronic device 110d obtains the first watermarked stream and the second watermarked stream in an encrypted form based on the sampled encryption mechanism and based on the one (or more) information. The encryption can thus be directed toward the parts of the first watermarked stream and the second watermarked stream that carry different data (e.g. such parts are a group of samples or byte blocks in video segments or media fragments or single frames or specific TS packets or video NAL units or portions in mdat box or video chunks). In this way, the encryption based on the one (or more) information thus does not add significant further differences between the first watermarked stream and the second watermarked stream.

In some implementations the first electronic device 110d executes the encryption of the first watermarked stream and the second watermarked stream. However, in other implementations, the first electronic device 110d sends the one (or more) information to a remote device for having the remote device to encrypt the first watermarked stream and the second watermarked stream (e.g. the remote device is implemented in a packager server). The remote device sends the first watermarked stream and the second watermarked stream in an encrypted form to the first electronic device 110d.

Back to Figure 4b, after the execution of the steps S400 and S410 (in any of the embodiments discussed above), the first electronic device 110d executes the steps S420, S430 and S440 (in any of the embodiments discussed above in relation with Figure 4 and Figure 4a).

Referring now to **Figure 5****,** we describe the steps of a method for generating a watermarked data stream according to one embodiment of the present disclosure.

More particularly, in a **step S500,** the second electronic device 120d receives, from the first electronic device 110d:
- a main stream comprising at least one portion of data present both in a first watermarked stream and in a second watermarked stream; and
- at least one differential stream, associated to a respective watermarked stream among the first and second watermarked streams, the differential stream comprising at least one portion of data present in the respective watermarked stream and not present in the main stream.

In a **step S510,** the second electronic device 120d obtains parts of the first watermarked stream and parts of the second watermarked stream from the main stream and from the at least one differential stream.

In some embodiments discussed above, the main stream is the first watermarked stream. Accordingly, the second electronic device 120d obtains in a straightforward way the parts of the first watermarked stream from the main stream. In other embodiments, the second electronic device 120d generates the parts of the first watermarked stream and/or the parts of the second watermarked stream from the main stream and from the at least one differential stream. In some embodiments, the operations to be implemented during the generation of the parts of the first watermarked stream and of the parts of the second watermarked stream are predefined in the second electronic device 120d. In other embodiments, the operations to be implemented during the generation of the parts of the first watermarked stream and of the parts of the second watermarked stream are defined through metadata received by the second electronic device 120d when receiving the main stream and/or the differential stream(s).

Back to Figure 5, in a **step S520,** the second electronic device 120d generates the watermarked data stream based on the first watermarked stream, based on the second watermarked stream and based on a predetermined identifier. For instance, during the step S520, the generation of the watermarked data stream implements an A/B watermarking scheme.

In a **step S530,** the second electronic device 120d sends the watermarked data stream to a third electronic device, e.g. to the terminal equipment 100. In this case, the third electronic device can be identified based on the identifier.

In some embodiments discussed above in relation with Figure 4 wherein the main stream is the first watermarked stream, the calculation of the differential stream (step S430) is executed for the second watermarked stream using the fact that the first watermarked stream and the second watermarked stream are of same length. In this case, in some embodiments of the step S500, the second electronic device 120d receives, from the first electronic device 110d:
- the main stream which is the first watermarked stream; and
- a differential stream associated to the second watermarked stream.

During the step S510, the obtaining parts of the second watermarked stream comprises replacing the samples present in the main stream and that have a corresponding sample in the differential stream by the corresponding sample.

In alternative implementations discussed above in relation with Figure 4 wherein the calculation of the differential stream (step S430) implements an element-wise comparison between the first watermarked stream and the second watermarked stream, the element-wise comparison is computed using a sample-wise XOR and the results are compressed. In this case, during the step S510, the obtaining parts of the second watermarked stream comprises decompressing the differential stream, and using a sample-wise XOR between the uncompressed differential stream and the main stream.

In some embodiments discussed above in relation with Figure 4 and Figure 4b wherein the main stream is the first watermarked stream, the calculation of the differential stream (step S430) is executed for the second watermarked stream using the fact that the first watermarked stream and the second watermarked stream are of different lengths. In this case, in some embodiments of the step S500, the second electronic device 120d receives, from the first electronic device 110d:
- the main stream which is the first watermarked stream; and
- a differential stream associated to the second watermarked stream.

During the step S510, the obtaining parts of the second watermarked stream comprises at least one execution of an action belonging to the group comprising:
- inserting, in the generated second watermarked stream, a piece of data present in the main stream at a location identified by an information present in the differential stream;
- deleting a piece of data present in the main stream at a location identified by an information present in the differential stream; and
- adding, in the generated second watermarked stream, a piece of data present in the differential stream at a location identified by an information present in the differential stream.

The action to be executed is defined through the information(s) present in the differential stream.

In some embodiments discussed above in relation with Figure 4, the main stream comprises the common data between the first watermarked stream and the second watermarked stream. In this case, in some embodiments of the step S500, the second electronic device 120d receives, from the first electronic device 110d:
- the main stream comprising the common data between the first watermarked stream and the second watermarked stream; and
- the first differential stream comprising the data present in the first watermarked stream and not present in the main stream; and
- the second differential stream comprising the data present in the second watermarked stream and not present in the main stream.

During the step S510, the obtaining parts of the first watermarked stream comprises adding data present in the first differential stream to the main stream. The obtaining parts of the second watermarked stream comprises adding data present in the second differential stream to the main stream.

Thus, the reconstruction of the first and second watermarked streams is simple as based only on add operations (e.g. concatenation).

## Claims

1. Method for generating a plurality of data streams from a first watermarked stream and from a second watermarked stream,
**characterized in that** a first electronic device (110d) executes:
- calculating (S420) a data stream, hereafter main stream, comprising at least one portion of common data present both in the first watermarked stream and in the second watermarked stream;
- for at least one watermarked stream among the first and second watermarked streams: calculating (S430) a data stream, hereafter differential stream, comprising at least one portion of data present in the watermarked stream and not present in the main stream; and
- sending (S440) the main stream and the at least one differential stream to a remote second electronic device (120d).

2. Method according to claim 1, wherein the main stream is the first watermarked stream and the calculating is executed for the second watermarked stream,
wherein the first watermarked stream and the second watermarked stream are of same length, the calculating implementing an element-wise comparison between the first watermarked stream and the second watermarked stream.

3. Method according to claim 1, wherein the main stream is the first watermarked stream and the calculating is executed for the second watermarked stream,
wherein the first watermarked stream and the second watermarked stream are of different length, the calculating comprising:
- searching (S430a) in the second watermarked stream for a piece of data present in the first watermarked stream;
- if the piece of data is found in the second watermarked stream, inserting in the differential stream an information representative of the location of the piece of data in the second watermarked stream; and
- if the piece of data is not found in the second watermarked stream, inserting in the differential stream an information representative of the location of the piece of data in the first watermarked stream and representative of the need to delete the piece of data from the first watermarked stream to reconstruct the second watermarked stream.

4. Method according to claim 3, wherein the calculating comprises:
- searching (S430b) in the first watermarked stream for a piece of data present in the second watermarked stream; and
- if the piece of data is not found in the first watermarked stream, inserting in the differential stream an information representative of the location of the piece of data in the second watermarked stream and of the need to add the piece of data to reconstruct the second watermarked stream.

5. Method according to claim 1, wherein the main stream comprises the common data between the first watermarked stream and the second watermarked stream,
and wherein the calculating comprises:
- for the first watermarked stream, calculating a first differential stream comprising the data present in the first watermarked stream and not present in the main stream; and
- for the second watermarked stream, calculating a second differential stream comprising the data present in the second watermarked stream and not present in the main stream.

6. Method according to claim 5, wherein said sending comprises:
- sending the main stream based on a multicast protocol; and
- sending the first differential stream and the second differential stream based on a unicast protocol responsive to a request sent by the second electronic device.

7. Method according to any of the claims 1 to 6, wherein the first electronic device executes:
- analyzing (S400) the first watermarked stream and the second watermarked stream in an unencrypted form for delivering at least one information representative of a part of the first watermarked stream and of the second watermarked stream carrying same data; and
- obtaining (S410) the first watermarked stream and the second watermarked stream in an encrypted form based on a sampled encryption mechanism using the at least one information,
and wherein the main stream and the at least one differential stream are calculated from the first watermarked stream and the second watermarked stream in the encrypted form.

8. Method for generating a watermarked data stream,
**characterized in that** a second electronic device (120d) executes:
- receiving (S500), from a first electronic device (110d):
- a data stream, hereafter main stream, comprising at least one portion of data present both in a first watermarked stream and in a second watermarked stream; and
- at least one data stream, hereafter differential stream, associated to a respective watermarked stream among the first and second watermarked streams, the differential stream comprising at least one portion of data present in the respective watermarked stream and not present in the main stream,
**and in that** the second electronic device executes:
- obtaining (S510) parts of the first watermarked stream and parts of the second watermarked stream from the main stream and from the at least one differential stream; and
- generating (S520) the watermarked data stream based on the parts of the first watermarked stream, based on the parts of the second watermarked stream and based on a predetermined identifier; and
- sending (S530) the watermarked data stream to a third electronic device (100).

9. Method according to claim 8, wherein the receiving comprises receiving:
- the main stream which is the first watermarked stream; and
- a differential stream associated to the second watermarked stream,
wherein the obtaining parts of the second watermarked stream comprises replacing the samples present in the main stream and that have a corresponding sample in the differential stream by the corresponding sample.

10. Method according to claim 8, wherein the receiving comprises receiving:
- the main stream which is the first watermarked stream; and
- a differential stream associated to the second watermarked stream,
wherein the obtaining parts of the second watermarked stream comprises at least one execution of an action belonging to the group comprising:
- inserting, in the generated second watermarked stream, a piece of data present in the main stream at a location identified by an information present in the differential stream;
- deleting a piece of data present in the main stream at a location identified by an information present in the differential stream; and
- adding, in the generated second watermarked stream, a piece of data present in the differential stream at a location identified by an information present in the differential stream,
the at least one execution being a function of said information.

11. Method according to claim 8, wherein the receiving comprises receiving:
- the main stream comprising the common data between the first watermarked stream and the second watermarked stream;
- a first differential stream comprising the data present in the first watermarked stream and not present in the main stream; and
- a second differential stream comprising the data present in the second watermarked stream and not present in the main stream,
wherein the obtaining parts of the first watermarked stream comprises adding data present in the first differential stream to the main stream,
wherein the obtaining parts of the second watermarked stream comprises adding data present in the second differential stream to the main stream.

12. Computer program product **characterized in that** it comprises program code instructions for implementing a method according to at least one of the claims 1 to 11, when said program is executed on a computer or a processor.

13. Electronic device for generating a plurality of data streams from a first watermarked stream and from a second watermarked stream,
**characterized in that** it comprises a processor (202) or a dedicated computing machine configured for:
- calculating (S420) a data stream, hereafter main stream, comprising at least one portion of common data present both in the first watermarked stream and in the second watermarked stream;
- for at least one watermarked stream among the first and second watermarked streams: calculating (S430) a data stream, hereafter differential stream, comprising at least one portion of data present in the watermarked stream and not present in the main stream; and
- sending (S440) the main stream and the at least one differential stream to a remote second electronic device (120d).

14. Electronic device for generating a watermarked data stream,
**characterized in that** it comprises a processor (202) or a dedicated computing machine configured for:
- receiving (S500), from a first electronic device (110d):
- a data stream, hereafter main stream, comprising at least one portion of data present both in a first watermarked stream and in a second watermarked stream; and
- at least one data stream, hereafter differential stream, associated to a respective watermarked stream among the first and second watermarked streams, the differential stream comprising at least one portion of data present in the respective watermarked stream and not present in the main stream,
**and in that** the processor (202) or the dedicated computing machine configured for:
- obtaining (S510) parts of the first watermarked stream and parts of the second watermarked stream from the main stream and from the at least one differential stream; and
- generating (S520) the watermarked data stream based on the parts of the first watermarked stream, based on the parts of the second watermarked stream and based on a predetermined identifier; and
- sending (S530) the watermarked data stream to a third electronic device (100).
